**Europäisches Patentamt**

**European Patent Office**

**Office européen des brevets**

(19)

(11) Veröffentlichungsnummer: **0 135 708**
**B1**

(12) # EUROPÄISCHE PATENTSCHRIFT

(45) Veröffentlichungstag der Patentschrift:
14.06.89

(51) Int. Cl.⁴: **B 32 B 3/20**, B 32 B 15/08

(21) Anmeldenummer: 84108839.6

(22) Anmeldetag: 26.07.84

(54) Verfahren zur Herstellung eines thermoplastischen Verbundkörpers.

(30) Priorität: 01.08.83 DE 3327694

(43) Veröffentlichungstag der Anmeldung:
03.04.85 Patentblatt 85/14

(45) Bekanntmachung des Hinweises auf die Patenterteilung:
14.06.89 Patentblatt 89/24

(84) Benannte Vertragsstaaten:
AT BE CH DE FR GB IT LI LU NL SE

(56) Entgegenhaltungen:
AT-B- 298 011
GB-A- 952 836
GB-A- 1 274 139
US-A- 3 134 705

(73) Patentinhaber: VEREINIGTE ALUMINIUM-WERKE
AKTIENGESELLSCHAFT, Berlin - Bonn
Postfach 2468 Georg-von-Boeselager-Strasse 25,
D-5300 Bonn 1 (DE)

(72) Erfinder: Behdorf, Hans, Zur Belsmühle 8,
D-5305 Alfter-Oedekoven (DE)
Erfinder: Dietzsch, Hans-Joachim, Grünaustrasse 9,
CH-3084 Wabern/Bern (CH)
Erfinder: Dietzsch, Otto, Degerfeld 642, CH-8260 Stein
am Rhein (CH)
Erfinder: Gerlach, Jürgen, Bommersheimer Weg 3 A,
D-6380 Bad Homburg (DE)
Erfinder: Hegen, Dieter, Dr., Sennhofstrasse 3,
D-7713 Hüfingen (DE)

(74) Vertreter: Müller-Wolff, Thomas, Dipl.-Ing., c/o
Vereinigte Aluminium-Werke AG Patentabteilung
Postfach 2468, D-5300 Bonn 1 (DE)

## Beschreibung

Die Erfindung betrifft ein Verfahren zur Herstellung eines thermoplastischen Verbundkörpers bestehend im wesentlichen aus einer Aneinanderreihung von gleichgerichteten, dünnwandigen Röhrchen aus thermoplastischem Material.

Nach DE-OS 2 749 764 (Solvay) ist ein Verbundmaterial in Form einer Verbundplatte bekannt, welche eine durch Heißpressen mit einer Polyolefinfolie verbundene Metallfolie umfaßt. Die Polyolefinfolie besteht dabei aus 10 bis 90 Gew.-% zelluloseartiger Fasern, die auch in Form von fibrilierten Strukturen vorliegen können.

Nach DE-OS 3 012 372 (Sandwich-Profil GmbH) ist ein Kollektorelement bekannt, das aus Kapillarenstücken aus Glas oder Kunststoff gebildet wird. Die Kunststoffkapillare können beispielsweise mit einem Spinnkopf hergestellt werden, wie er in DE-PS 1 047 984 beschrieben ist.

Für viele Anwendungsbereiche ist es wichtig, daß bei vorgegebener Dicke des Verbundkörpers hohe Festigkeitswerte bei möglichst geringem spezifischem Gewicht erreicht werden. Diesen Anforderungen genügen die bisher bekannten Verbundmaterialien nicht in ausreichendem Maße.

Sie gestatten ferner nur die Verbindung von ebenen Deckschichten mit ebenen Kernmaterialien zu Verbundwerkstoffen.

Aufgabe der vorliegenden Erfindung ist es daher, ein Verfahren zur Herstellung eines Verbundkörpers aus thermoplastischem Material anzubieten, der hohe Festigkeitswerte bei niedriger Dichte ausweist.

Die Aufgabe wird bei einem Verfahren der eingangs genannten Art dadurch gelöst, daß man eine Aneinanderreihung von gleichgerichteten Röhrchen in Plattenform bringt, diese Platte unter Verkürzung der Röhrchenlänge mit mindestens einer die Röhrchenenden abdeckenden Metallage unter Druck und Temperatur verbindet, indem die Röhrchenenden im plastischen Zustand heruntergeschmolzen werden, bis sie vollflächig an der Deckschicht anliegen, wobei sie in Abhängigkeit vom Röhrchendurchmesser, von der Wanddicke und vom Abschmelzgrad zunehmend verdickt und konsolenartig verformt werden.

Aufgrund ihrer materialspezifischen Eigenschaften ist es bei dieser Verbundkonstruktion vorteilhaft, daß die Metallagen aus Aluminium und das thermoplastische Material aus Polypropylen oder Polycarbonat bestehen.

Für den Fall besonders hoher Beanspruchungen sind die Wandungen der Röhrchen zum Röhrchenende hin verdickt und am Röhrchenende eine Konsole und ein materialeigener Verschluß aus dem thermoplastischen Material ausgebildet. Durch zahlreiche Versuche hat sich herausgestellt, daß Röhrchenkörper mit dieser Querschnittsform höhere Druckbelastungen aufnehmen können als unverformte glatte Röhrchen gleicher Bauhöhe und gleicher Dichte.

Das Verfahren zur Herstellung des erfindungsgemäßen Verbundkörpers verläuft in folgenden Schritten:

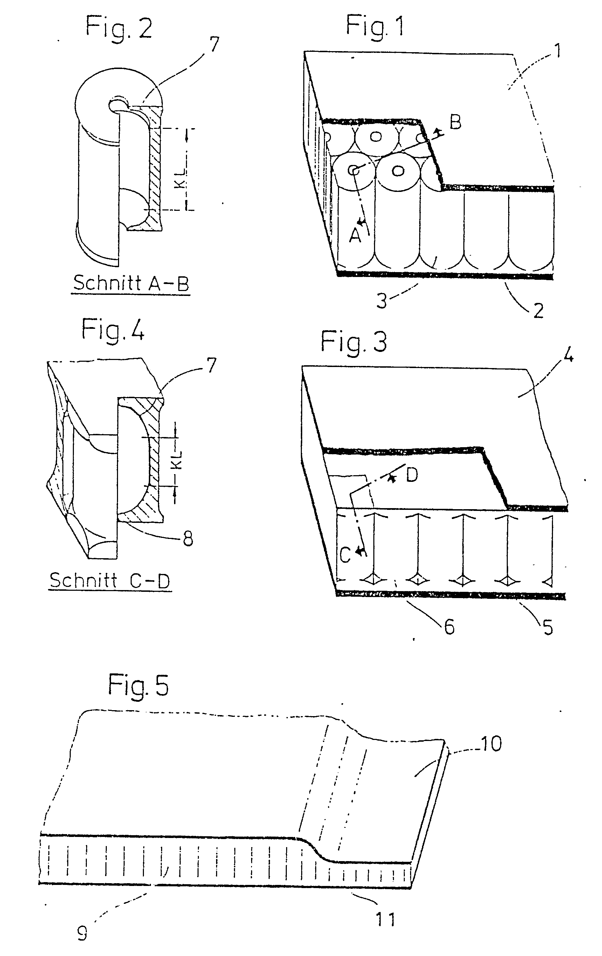

1. Eine Aneinanderreihung von gleichgerichteten Röhrchen in Plattenform wird mit mindestens einer waagerecht zur Röhrchenachse angeordneten Metallage unter Druck und Temperatur verbunden (Fig. 1).

2. Die Röhrchenenden werden im plastischen Zustand heruntergeschmolzen, so daß sie sich dabei in Abhängigkeit von Röhrchendurchmesser, Röhrchenwanddicke und Abschmelzgrad zunehmend verdicken (Fig. 2).

3. An den Röhrchenenden bilden sich Konsolen oder ein materialeigener Verschluß, der sich mit der Metallage schmelztechnisch verbindet (Fig. 4).

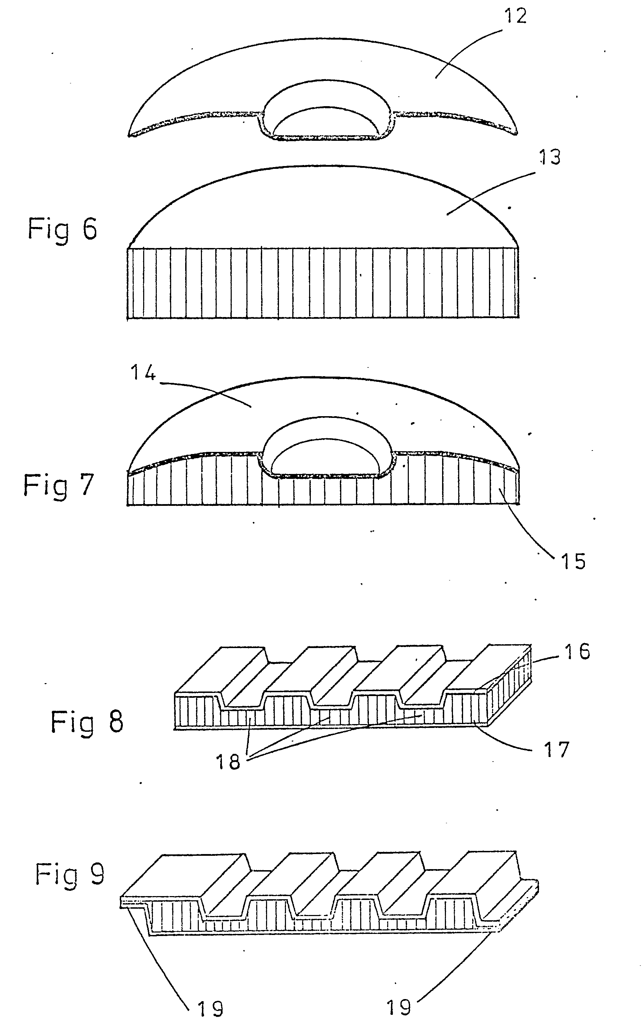

4. Die Röhrchenenden werden im plastischen Zustand soweit heruntergeschmolzen, bis sich vollflächig an der Kontur der vorgeformten Deckschicht anliegen (Fig. 7).

Die bei der Herstellung anfallenden Temperaturen liegen kurz über dem Erweichungspunkt des jeweiligen thermoplastischen Materials, vorzugsweise z.B. Polyäthylen, Polycarbonat oder Polypropylen.

Vorteilhafterweise ist die Ausgangswanddicke der Röhrchen 0,1 bis 0,5 mm und der Außendurchmesser <3 mm.

Durch Änderung der Geometrie des statisch belasteten Röhrchenkörpers sowie durch Verdickung der Röhrchenwandung zum Röhrchenende hin wird erreicht, daß die kritische Knicklänge der Wandung reduziert wird und somit die Belastbarkeit des Verbundkörpers in Faserrichtung in Abhängigkeit mit der Verkleinerung der Knicklänge wächst (Fig. 1–4 u. siehe Knicklänge KL).

Durch die zusätzliche sogenannte Konsolenbildung (Fig. 1 und 2) oder materialeigene Verschlußbildung (Fig. 3 und 4) an den Rohrenden werden die Kontaktflächen zwischen Röhrchenenden und Deckschichten vergrößert, wodurch die Haftung zwischen beiden Materialien wesentlich verbessert wird.

Obige Gestaltung des Kunststoffkerns läuft im Fertigungsprozeß des Verbundes zeitgleich mit der Schmelzverbindung der Metallagen ab. Bei diesem Fertigungsverfahren haben sich besonders Metallagen aus Aluminium bewährt, die entsprechend der bekannten Art im coil-coating-Verfahren speziell für diese Anwendung vorbehandelt werden, um eine optimale Haftung zwischen Metallage und Kernwerkstoff zu gewährleisten.

Hierzu sind vorzugsweise die Metallagen zum Kernwerkstoff hin geprimert und mit einem Haftvermittler im Dickenbereich von 0,010 bis 0,120 mm versehen.

Der festigkeitstragende Kern ist aus einer Aneinanderreihung von gleichgerichteten, senkrecht zur Deckschicht angeordneten Röhrchen gebildet, wobei ganze Röhrchenplatten durch thermisches Schneiden von einzelnen Röhrchenbündeln hergestellt werden. Die einzelnen Röhrchen lassen sich vorzugsweise spinntechnisch praktisch endlos erzeugen (s. DE-PS 1 047 984).

Insgesamt ergibt sich bei der erfindungsgemäßen Konstruktion ein erheblich verringertes spezifisches Gewicht bei gleichzeitig ausreichender Gesamtfestigkeit. Im Vergleich zu marktgängigen Verbundplatten mit Metalldeckschichten und einem thermoplastischen Vollkern nach DE-PS-1 932 890.6 beträgt die Gewichtsreduzierung des Kerns je nach Ausführungsart 50 bis 85% bei gleicher Plattendicke.

Die erfindungsgemäße Herstellung des Verbundkörpers geschieht unter kurzer Wärmebeaufschlagung bis zum Erweichungspunkt des jeweiligen Thermoplasten in den oberen und unteren Röhrchenendbereichen.

Eine bevorzugte Ausführungsform der Erfindung betrifft ein Verfahren zur Herstellung von Verbundelementen, bestehend aus vorverformten Deckschichten aus Metallen oder Kunststoffen mit Wanddicken < 2 mm und einem thermoplastischen Körper, der im wesentlichen aus einer Aneinanderreihung von gleichgerichteten, senkrecht zur Deckschicht angeordneten Röhrchenkörpern besteht. Die Deckschichten und die Röhrchenkörper werden thermisch beaufschlagt und unter Druck schmelztechnisch miteinander verbunden.

Die Außendurchmesser der Röhrchenkörper liegen vorzugsweise zwischen 0,5 bis 6 mm. Diese Röhrchen werden beispielsweise entsprechend DE-PS 1 047 984 hergestellt.

Es ist möglich, die Deckschichten zu verformen oder dekorativ zu prägen und dann mit dem Röhrchenkörper zu verbinden. Diese neuen Strukturen bilden sich bei dem späteren Kaschiervorgang nicht zurück, da sich die Röhrchen durch die thermische Beaufschlagung während des Kaschiervorganges ohne Haftungsverluste der jeweiligen Form oder Stuktur der Deckschichten anpassen.

Ferner wird erfindungsgemäß angestrebt, beim Verbindungs- oder Kaschiervorgang durch weiteres thermisches Zusammenpressen der Röhrchen über das Maß der vorherigen Verdichtung hinaus im Randbereich der Platte zusätzliche Verformungen und Festigkeitssteigerungen des Verbundes zu erreichen (Fig. 5). Das beim Zusammenpressen verdrängte Material wird in den Hohlräumen der Röhrchen aufgenommen. Trotz der hohen Verdichtung des Röhrchenkörpers liegt seine Dichte auch in diesen Bereichen noch wesentlich unter der eines Vollkunststoffkerns.

Im folgenden wird die Erfindung anhand von drei Ausführungsbeispielen näher erläutert. Es zeigen:

Fig. 1 – Perspektivischer Querschnitt durch einen erfindungsgemäßen Verbundkörper bei ca. 30% Kernverdichtung

Fig. 2 – Teilquerschnitt durch ein Röhrchen gemäß Schnittlinie A, B aus Fig. 1 mit Konsolenbildung

Fig. 3 – Perspektivischer Querschnitt durch einen erfindungsgemäßen Verbundkörper mit ca. 50% Kernverdichtung

Fig. 4 – Teilquerschnitt durch ein geschlossenes Röhrchen entlang Schnittlinie C, D aus Fig. 3 mit Konsolenbildung und materialeigenem Verschluß

Fig. 5 – Querschnitt durch einen erfindungsgemäßen Verbundkörper mit Verformungen im Randbereich

Fig. 6 – vorgeformte Deckschicht und Röhrchenplatte vor dem Verbinden

Fig. 7 – Verbundkörper mit Deckschicht und Füllstoff (Röhrchenplatte)

Fig. 8 – Verbundkörper mit oberer und unterer Deckschicht und verdichtetem Bereich

Fig. 9 – Verbundkörper mit versiegeltem Bereich

In Fig. 1 sind zwei Metallagen 1, 2 als Deckschichten aus Aluminium mit einer Vielzahl von aneinandergereihten, gleichgerichteten Röhrchen 3 dargestellt, die zusammen einen Verbundkörper bilden. Aus dem Teilquerschnitt in Fig. 2 ist zu erkennen, daß die Röhrchenenden zwar offen, aber gegenüber dem mittleren Wandbereich verdickt sind. Die freie Knicklänge KL ist als Maß für die Steifigkeit angegeben. Je größer die Knicklänge KL desto eher neigen die Röhrchenwandungen zum Ausknicken bei Belastung in Richtung der Röhrchenachse.

Fig. 3 zeigt analog zu Fig. 1 einen Teilquerschnitt des erfindungsgemäßen Verbundkörpers mit Metallagen 4, 5 als Deckschichten und einer Vielzahl von Röhrchen. Im Gegensatz zu den in Fig. 1, 2 dargestellten Röhrchen 3 sind die Röhrchen 6 nunmehr an ihren Enden 8 verschlossen. Dies geht auch aus der Darstellung in Fig. 4 hervor, bei der die Knicklänge mit KL und die konsolenartige Verdickung mit 7 bezeichnet ist.

Anhand von Fig. 5 soll die Möglichkeit einer noch weiteren zusätzlichen Verdichtung des Kernmaterials in bestimmten Oberflächenbereichen bei der Verbundfertigung dargestellt werden.

Der Röhrchenkörper 9 befindet sich zwischen zwei Aluminiumdeckschichten 10, 11. Die Deckschicht 10 wurde vor dem Zusammenbringen mit der Kernschicht im Randbereich vorgeformt.

Fig. 6 zeigt die vorgeformte Deckschicht 12 und die Röhrchenplatte 13 vor dem Verbinden, während Fig. 7 den Verbundkörper mit Deckschicht 14 und Füllstoff (Röhrchenplatte) 15 darstellt.

Um auch die Deckschichten abmagern zu können – aus technischen oder preislichen Gründen – muß der Füllstoff zusätzlich Druck- und Zugaufnahmebeanspruchungen übernehmen. Dies erfolgt bei der Herstellung des erfindungsgemäßen Verbundkörpers dadurch, daß bei der Heißpressung, bedingt durch die Formgebung der Deckschicht 16, die Röhrchenplatte in konkaven Bereichen der vorgeformten Deckschicht stärker zusammengeschmolzen wird (Fig. 8).

Die Raumdichte des Röhrchenkörpers in diesen Bereichen erlaubt eine höhere Beanspruchungsaufnahme. Sie kann durch die Auswahl der Röhrchenplattendicke bis zu 100% verbessert werden. Das beim Zusammenpressen verdrängte Material wird in den Hohlräumen der Röhrchen aufgenommen. Die Raumdichte von 100% des Kunststoffkerns wird auch erreicht, wenn bei 2 Deckschichten der Raum des Füllstoffes praktisch auf Null zusammengefahren wird, z.B. bei Erreichung einer Siegelung 19 (Fig. 9).

In Fig. 8 sind die untere Deckschicht mit 17 und der verdichtete Bericht mit 18 beziffert.

**Patentansprüche**

1. Verfahren zur Herstellung eines thermoplastischen Verbundkörpers, bestehend im wesentlichen aus einer Aneinanderreihung von gleichgerichteten, dünnwandigen Röhrchen aus thermoplastischem Material, dadurch gekennzeichnet, daß man eine Aneinanderreihung von gleichgerichteten Röhrchen in Plattenform bringt, diese Platte unter Verkürzung der Röhrchenlänge mit mindestens einer die Röhrchenenden abdeckenden Metallage unter Druck und Temperatur verbindet, indem die Röhrchenenden im plastischen Zustand heruntergeschmolzen werden bis sie vollflächig an der Deckschicht anliegen, wobei sie in Abhängigkeit vom Röhrchendurchmesser, von der Wanddicke und vom Abschmelzgrad zunehmend verdickt und konsolenartig verformt werden.

2. Verfahren nach Anspruch 1, dadurch gekennzeichnet, daß die Metallagen aus Aluminium und das thermoplastische Material aus Polypropylen oder Polycarbonat bestehen und die Röhrchenenden soweit heruntergeschmolzen werden, daß sich ein materialeigener Verschluß bildet.

3. Verfahren nach einem der vorhergehenden Ansprüche, dadurch gekennzeichnet, daß mindestens eine der Metallagen vor dem Zusammenbringen mit der Kernschicht im Randbereich vorgeformt ist.

4. Verfahren nach einem der vorhergehenden Ansprüche, dadurch gekennzeichnet, daß beim Verbindungs- und Kaschiervorgang im Randbereich der Platte zusätzliche Verformungen zur Festigkeitssteigerung des Verbundes durch weiteres thermisches Zusammenpressen der Röhrchen über das Maß der vorherigen Verdichtung hinaus aufgebracht werden.

5. Verfahren nach einem der vorhergehenden Ansprüche, dadurch gekennzeichnet, daß mindestens eine der Metallagen vor dem Zusammenbringen mit der Kernschicht vorgeformt und mit einem Haftvermittler versehen ist.

**Claims**

1. Process for producing a thermoplastic composite body essentially comprising an assembly of similarly aligned, thin-walled tubular elements made from thermoplastic material, characterized in that an assembly of similarly aligned tubular elements is formed into a sheet, this sheet is joined to at least one metal layer covering the ends of the tubular elements by the application of pressure and temperature, the lengths of the tubular elements being shortened, in that the ends of the tubular elements are melted down in the plastic condition until they lie in all-over contact with the outer layer, the tubular elements being increasingly compacted depending on the diameter of the tubular element, on the wall thickness and on the degree of melting, and being deformed into support-like structures.

2. Process according to Claim 1, characterized in that the metal layers are formed from aluminium and the thermoplastic material is formed from polypropylene or polycarbonate and the ends of the tubular elements are melted down sufficiently for a closure of the same material to be formed.

3. Process according to one of the preceding claims, characterized in that at least one of the metal layers is preformed in the region of the edge before being combined with the core layer.

4. Process according to one of the preceding claims, characterized in that during the joining process and the laminating process, additional deformations are introduced in the region of the edge of the sheet in order to achieve increases in the strength of the composite by further thermal compression together of the tubular elements beyond the extent of the previous compacting.

5. Process according to one of the preceding claims, characterized in that at least one of the metal layers is preformed and coated with an adhesion promoter before being combined with the core layer.

**Revendications**

1. Procédé de préparation d'un corps composite thermoplastique, constitué pour l'essentiel d'un alignement de petits tubes à paroi mince redressés, faits de matière thermoplastique, caractérisé en ce qu'on met un alignement de petits tubes redressés sous forme de plaque, en ce qu'on relie cette plaque en raccoucissant la longueur des tubes avec au moins une couche métallique recouvrant les extrémités des petits tubes à une certaine pression et température, en fondant les extrémités des petits tubes à l'état plastique jusqu'à ce qu'elles touchent la couche de recouvrement sur toute sa surface, où elles s'épaississent de plus en plus et prennent une forme de console en fonction du diamètre des petits tubes, de l'épaisseur de leur paroi et du degré de fusion.

2. Procédé selon la revendication 1, caractérisé en ce que les couches métalliques se composent d'aluminium et la matière thermoplastiue de polypropylène ou de polycarbonate et en ce que les extrémités des petits tubes sont fondues jusqu'à ce qu'il se forme une obturation propre à la matière.

3. Procédé selon l'une des revendications précédentes, caractérisé en ce qu'au moins une des couches métalliques est préformée avant d'être réunie à la couche noyau à sa périphérie.

4. Procédé selon l'une des revendications précédentes, caractérisé en ce que lors du processus d'assemblage et de revêtement des déformations supplémentaires sont apportées dans la zone périphérique de la plaque, par poursuite de la compression thermique des petits tubes au-delà du compactage antérieur, afin d'accroître la solidité du composite.

5. Procédé selon l'une des revendications précédentes, caractérisé en ce qu'au moins une des couches métalliques est préformée avant d'être réunie à la couche noyau et est munie d'un adhésif.

Fig. 2

Fig. 1

Schnitt A-B

Fig. 4

Fig. 3

Schnitt C-D

Fig. 5

12

Fig 6

13

14

Fig 7

15

16

Fig 8

18

17

Fig 9

19

19